# EUROPÄISCHE PATENTSCHRIFT

(11) **EP 0 475 030 B1**
(45) Veröffentlichungstag und Bekanntmachung des Hinweises auf die Patenterteilung: **28.09.1994**
(21) Anmeldenummer: 91112292.7
(22) Anmeldetag: 20.08.1991
(51) Int. Cl.: B23K 35/38

(54) **Schutzgas für das Lichtbogenschweissen von Aluminium**
Shielding gas for arc welding of aluminium
Gaz de protection pour le sondage à l'arc d'aluminium

(30) Priorität: 05.09.1990 DE 4028074
(43) Veröffentlichungstag der Anmeldung: 18.03.1992
(73) Patentinhaber: MESSER GRIESHEIM GMBH, D-60270 Frankfurt (DE)
(72) Erfinder: Farwer, Alfward, Dr., W-4005 Meerbusch 3 (DE)

(56) Entgegenhaltungen:
- DE-B- 1 000 940
- FR-A- 990 934
- GB-A- 759 422
- AUTOMATIC WELDING.Bd. 31, Nr. 10, Oktober 1978,CAMBRIDGE GB Seiten 3 - 6; M.M.NERODENKO ET AL: 'Niobium alloys welded in helium with nitrogen added'

## Beschreibung

Die Erfindung betrifft ein Schutzgas für das Lichtbogenschweißen von Aluminium, bestehend aus Argon oder Gemischen aus Argon und Helium, nach dem Oberbegriff des Anspruches 1.

Beim Wolfram-Inertgasschweißen (WIG) und beim Metall-Inertgasschweißen (MIG) ist man bei der Schutzgasauswahl aus verschiedenen Gründen wesentlich stärker eingeschränkt als beispielsweise beim Metall-Aktivgasschweißen (MAG). So setzt man beim MAG-Schweißen dem häufig verwendeten Basisgas Argon vielfach aktive Komponenten wie Sauerstoff und Kohlendioxid zu. Im Vergleich zum Schweißen unter reinem Inertgas, also unter Argon, Helium oder Argon-Helium-Gemischen ergeben sich hierdurch erhebliche Verbesserungen beim Schweißvorgang und beim Schweißergebnis.

Besonders stark sind die Einschränkungen hinsichtlich der Zugabe weiterer Komponenten zum Inertgas bei der Aluminiumschweißung. Hier treten wegen der hohen Reaktivität des Aluminiums sofort störende Effekte auf. So verursacht Wasserstoff beispielsweise Poren, Sauerstoff und Stickstoff bilden Oxide bzw. Nitride. Dies ist allein schon vom Nahtaussehen her nicht akzeptabel. Beim Schweißen von Aluminium verwendet man daher technisch reine Inertgase, also Argon oder Argon-Helium-Gemische mit einer Reinheit von mindestens 99,996 %. Die Summe aller Verunreinigungen beträgt daher maximal 40 vpm (Volumenteile pro Million).

Der Erfindung liegt die Aufgabe zugrunde, ein Schutzgas auf der Basis von Argon oder Argon-Helium-Gemischen für das Lichtbogenschweißen von Aluminium zu finden, welches durch Zugabe einer weiteren Komponente eine Verbesserung des Schweißvorganges und des Schweißergebnisses gegenüber dem Schweißen unter reinem Inertgas ermöglicht, ohne daß es zu störenden Nebeneffekten kommt.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Es hat sich überraschend gezeigt, daß durch die erfindungsgemäße Beimischung geringer Mengen von Stickstoff, welche einerseits deutlich über den zulässigen maximalen Verunreinigungen im Schutzgas liegen, andererseits aber auch deutlich unter den üblichen Beimischungsmengen von Gasgemischen liegen, sich vorteilhafte Effekte ergeben. Der Spielraum für die Stickstoffzugabe ist daher sehr eng und bewegt sich zwischen mindestens 120 vpm und höchstens 250 vpm.

Die Vorteile bestehen beim Wechselstrom-WIG-Schweißen vor allem in einem ruhiger und stabiler brennenden Lichtbogen. Gegenüber dem Schweißverfahren nach dem Stand der Technik ist der Lichtbogen konzentrierter und ermöglicht eine höhere Energieeinbringung.

Ebenfalls groß sind die Vorteile beim MIG-Schweißen von Aluminium. Es ergibt sich auch hier ein sehr ruhiger Werkstoffüberrang mit dem Ergebnis, daß die Nähte äußerst blank bleiben. Weiter ergibt sich ein verbessertes sehr glattes Nahtflankenanfließen und der Einbrand wird intensiviert.

Der bevorzugte Bereich für die erfindungsgemäße Beimischung von Stickstoff erstreckt sich von 120 vpm bis 180 vpm mit einem Optimum um 150 vpm.

Bei Stickstoffgehalten unter 80 vpm verschwinden die genannten vorteilhaften Effekte, bei Stickstoffgehalten oberhalb 250 vpm treten dagegen störende Nebeneffekte auf. So gibt es beim WIG-Schweißen störende Nahtverfärbungen und beim MIG-Schweißen sacken die Kehlnähte stark durch.

Das Schutzgas mit der erfindungsgemäßen Beimischung aus Stickstoff kann auf verschiedene Art hergestellt werden. Entweder wird direkt das Gemisch aus den Ausgangskomponenten erzeugt, oder es wird zunächst ein Muttergemisch höherer Konzentration erzeugt, dem gasförmig zugemischt wird. Da der vorteilhafte Effekt der erfindungsgemäßen Stickstoffbeimengung über einen relativ weiten Konzentrationsbereich (± 20% vom Optimum) ziemlich gleichbleibend ist, kann im Prinzip auch bei einer Flüssigversorgung, beispielsweise mit Argon der Stickstoff, direkt dem Argon zugemischt werden.

In Sonderfällen kann außer Stickstoff auch etwas Sauerstoff beigemischt werden, ebenfalls in Mengen, die nur wenig oberhalb der Verunreinigungen im Inertgas technischer Qualität liegen. Der Sauerstoff verbindet sich hierbei mit Stickstoff zu Stickstoffmonoxid, welches die Ozonbildung unterdrücken kann.

Vergleichsuntersuchungen zum Einbrand wurden durchgeführt zwischen reinem Argon und einem Argon mit 150 vpm Stickstoffzusatz.

Besonders gut kann das Einbrandverhalten im Vergleich mit sog. Auftragsschweißungen dargelegt werden, wobei so geschweißt wird, daß keine völlige Durchschweißung erfolgt.

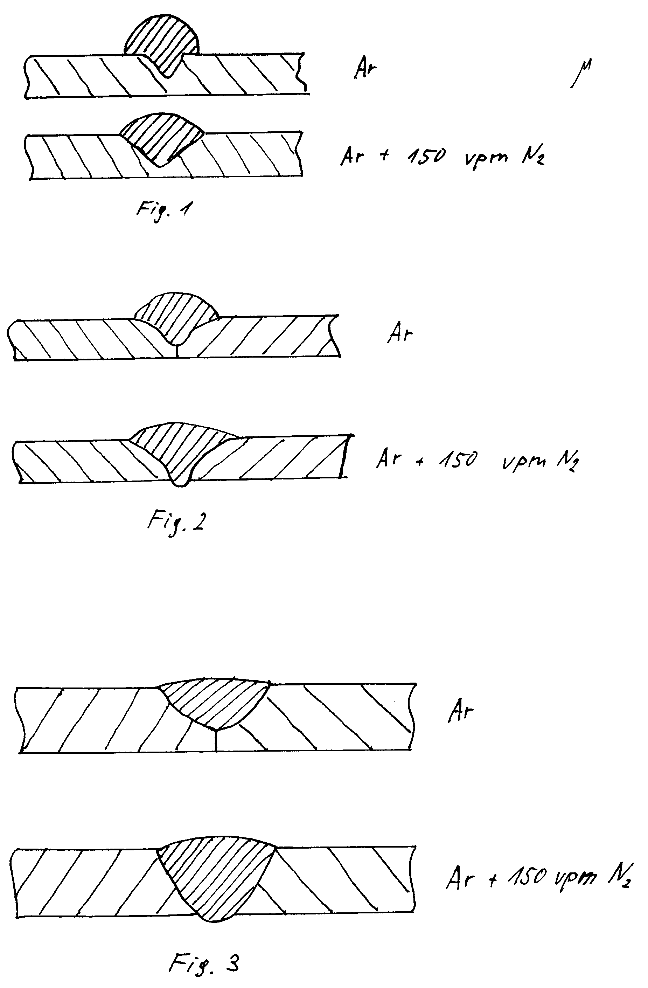

Fig. 1 zeigt das Ergebnis einer Metall-Inertgas-Auftragsschweißung bei 100 A auf einem 5 mm dicken Aluminiumblech. Verwendet wurde eine 1,2 mm dicke Drahtelektrode aus einer Al-Si-Legierung (AlSi5) Die Schweißgeschwindigkeiten betrug 0,3 m/min. Mit reinem Argon ergibt sich ein sehr instabiles Schweißen und eine Metallausbringung ohne richtige Anbindung am Blech, der Zusatzwerkstoff liegt stark überwölbt auf. Dagegen intensiviert der geringe Stickstoffzusatz den Einbrand so stark, daß sich eine glatte einwandfreie Schweißraupenoberseite mit normalem Einbrandprofil und sicherer Flankenbindung ergibt.

Fig. 2 zeigt eine Verbindungsschweißung an einem 5 mm Blech mit einer Drahtelektrode aus einer Al-Mg-Mu-Legierung (AlMg4, 5Mn) Reines Argon hat hier bei einer Stromstärke von 130 A einen unzureichenden Einbrand, mit 150 vpm Stickstoffzusatz wird eine sichere Durchschweißung erreicht. (Schweißgeschwindigkeit 0,35 m/min.) Auch ist die Nahtoberseite feinschuppiger und die Nahtüberwölbung geringer.

Fig. 3 zeigt die Einbrände einer WIG-Schweißung im Vergleich an einem 8 mm-Blech mit 250 A. Will man mit Argon eine Durchschweißung erreichen, muß man die Schweißgeschwindigkeit etwa um 20 % reduzieren.

Als grundsätzlicher Vorteil kam bei dem Stickstoff-Gemisch sehr deutlich hinzu, daß sowohl das Zündverhalten als die Lichtbogenstabilität immer günstiger waren.

## Patentansprüche

1. Schutzgas für das Lichtbogenschweißen von Aluminium, bestehend aus Argon oder Gemischen aus Argon und Helium,
gekennzeichnet durch eine Beimischung von 120 vpm bis 250 vpm Stickstoff.

2. Schutzgas nach Anspruch 1,
gekennzeichnet durch eine Beimischung von 120 vpm bis 180 vpm Stickstoff.

3. Verfahren zum Wolfram-Inertgasschweißen und Metall-Inertgasschweißen von Aluminium,
dadurch gekennzeichnet,
daß dem aus Argon oder Gemischen von Argon und Helium bestehenden Inertgas 120 vpm bis 250 vpm Stickstoff beigemischt sind.

4. Verfahren nach Anspruch 3,
dadurch gekennzeichnet,
daß dem Inertgas 120 vpm bis 180 vpm Stickstoff beigemischt sind.

## Claims

1. Shielding gas for arc-welding of aluminium, consisting of argon or mixtures of argon and helium, characterized by an admixture of 120 vpm to 250 vpm of nitrogen.

2. Shielding gas according to Claim 1, characterized by an admixture of 120 vpm to 180 vpm of nitrogen.

3. Process for tungsten-inert gas-welding and metal-inert gas-welding of aluminium, characterized in that 120 vpm to 250 vpm of nitrogen are admixed to the inert gas consisting of argon or mixtures of argon and helium.

4. Process according to Claim 3, characterized in that 120 vpm to 180 vpm of nitrogen are admixed to the inert gas.

## Revendications

1. Gaz de protection pour le soudage à l'arc d'aluminium, constitué par de l'argon ou des mélanges d'argon et d'hélium, gaz de protection caractérisé par une adjonction de 120 vpm à 250 vpm d'azote.

2. Gaz de protection selon la revendication 1, caractérisé par une adjonction de 120 vpm à 180 vpm d'azote.

3. Procédé pour le soudage sous gaz inerte du wolfram et le soudage sous gaz inerte d'aluminium, caractérisé en ce qu'au gaz inerte constitué d'argon ou de mélange d'argon et d'hélium, est ajouté 120 vpm à 250 vpm d'azote.

4. Procédé selon la revendication 3, caractérisé en ce qu'au gaz inerte sont ajoutés 120 vpm à 180 vpm d'azote.
